# EUROPÄISCHE PATENTSCHRIFT

(11) **EP 2 151 766 B1**
(45) Veröffentlichungstag und Bekanntmachung des Hinweises auf die Patenterteilung: **23.11.2011**
(21) Anmeldenummer: 08014037.9
(22) Anmeldetag: 06.08.2008
(51) Int. Cl.: G06F 15/02

(54) **Taschenrechner**
Pocket calculator
Calculatrice de poche

(43) Veröffentlichungstag der Anmeldung: 10.02.2010
(73) Patentinhaber: Korn, Ralf, 77974 Meissenheim (DE); Grimm, Gerhard, 79336 Herbolzheim (DE)
(72) Erfinder: Korn, Ralf, 77974 Meissenheim (DE); Grimm, Gerhard, 79336 Herbolzheim (DE)
(74) Vertreter: Zimmermann, Günter

(56) Entgegenhaltungen:
- DE-U1- 29 501 470
- US-A- 5 483 472

## Beschreibung

Die Erfindung bezieht sich auf einen Taschenrechner mit den Merkmalen des Oberbegriffs des Anspruchs 1. Die Erfindung bezieht sich auch auf die Verwendung des Taschenrechners.

Ein derartiger Taschenrechner ist durch das Gebrauchsmuster 295 01 470 U1 bekannt. Beim Einkauf von Waren werden gleiche Produkte unterschiedlicher Hersteller häufig in unterschiedlichen Packungsgrößen angeboten. Mit dem bekannten Rechner können Preisvergleiche durchgeführt werden, in dem in einer vorgegebenen Reihenfolge die Mengengrößen und die Preise der zu vergleichen Produkte eingegeben werden. Es wird dann berechnet und angezeigt, welches Produkt um welchen Betrag preisgünstiger ist. Nachteiligerweise muss bei Bedienung des bekannten Taschenrechners darauf geachtet werden, dass zuerst die erste Mengengröße und dann der erste Preis, dann die zweite Mengengröße eingegeben wird. Bei falscher Reihenfolge der Eingaben führt dies zu Fehlrechnungen. Bei einer weiteren Ausführungsform des bekannten Rechners wird die jeweils einzugebende Größe angezeigt. Auch dies kann nachteiligerweise zu Bedienungsfehlern führen, wenn die geforderte einzugebende Größe auf dem Produkt nicht ersichtlich ist. Beim Berechnen der Vergleichswerte fehlt dann ein Eingabewert und die durchgeführte Rechnung ist fehlerhaft. Fehler beim Bedienen des bekannten Rechners können auch auftreten, wenn der Benutzer eine andere Mengeneinheit als die im Rechner vorgesehene eingibt.

Ein weiterer Taschenrechner ist durch die US-A-5 483 472 bekannt. Bei diesem Rechner werden durch Betätigen einer Scroll-Taste in einem Menü die Produkte, die Menge, die Mengeneinheit oder der Preis aufgelistet und auf einem Display angezeigt, um anschließend den entsprechenden Wert einzugeben. Der Benutzer muss sich mühsam durch ein Menü durcharbeiten, bei deren Bedienung Eingabefehler auftreten können.

Die Aufgabe der Erfindung wird somit darin gesehen, den Taschenrechner der eingangs genannten Art und die Verwendung dieses Taschenrechners derart weiterzuentwickeln, dass er übersichtlich und einfach zu bedienen ist. Weiterhin soll der Benutzer eigenständig entscheiden können, welchen Wert er eingeben will. Zusätzlich sollen dem Benutzer die langfristigen Auswirkungen eines günstigen Einkaufs verdeutlicht werden.

Zur Lösung dieser Aufgabe wird erfindungsgemäß vorgeschlagen, dass der Taschenrechner gemäß dem Oberbegriff des Anspruchs 1 entsprechend dem kennzeichnenden Teil dieses Anspruchs ausgebildet ist. Hinsichtlich der Verwendung wird die Aufgabe der Erfindung durch die Verwendung eines Taschenrechners mit den Merkmalen des Anspruchs 8 gelöst.

Führt der Benutzer einen Preisvergleich durch, so drückt er die erste Produktwahltaste und gibt dann über die Eingabetasten den Preis für das erste Produkt ein. Die Preiseingabe wird durch Drücken einer Enter-Taste beendet. Anschließend drückt er bei den Mengeneinheitswahltasten die entsprechende Einheitstaste für die Mengeneinheit, die auf dem Produkt angegeben ist, beispielsweise Gramm oder Kilogramm. Danach wird über die Eingabetasten oder Zifferntasten der Mengenwert eingegeben. Der Benutzer drückt nun die zweite Produktwahltaste und verfährt in gleicher Weise wie vorstehend beschrieben, um den Preis und die Einheit bzw. Menge des zweiten Produktes einzugeben. In gleicher Weise verfährt der Benutzer gegebenenfalls für ein drittes Produkt. Es ist auch denkbar, dass Preis und Menge jedes Produkts vor dem Drücken der Produktwahltaste und der Mengeneinheitswahltaste eingegeben werden und erst anschließend die entsprechenden Tasten gedrückt werden. Der Rechner kann nun den Preis pro Mengeneinheit bei den verschiedenen Produkten berechnen und das günstigste Produkt anzeigen. Der erfindungsgemäße Taschenrechner ist in einfacher Weise bedienbar und der Benutzer kann eigenständig entscheiden, welche Eingabewerte er welchem Produkt zuordnet.

Damit für den Benutzer erkennbar wird, welche Werte er bereits eingegeben hat, sind für die Anzeige von Preis und Menge jeweils separate Anzeigefelder vorgesehen. Dabei ist jeder Produktwahltaste ein Anzeigefeld für den Preis und ein Anzeigefeld für die Menge und ein Anzeigefeld für den Preis pro Mengeneinheit naheliegend zugeordnet. Damit kann der Benutzer in einfacher Weise den Preis pro Mengeneinheit ablesen und dadurch erkennen, welches das für ihn günstigste Produkt ist. Ergänzend kann der Benutzer durch Betätigung einer Taste "best price" sich das günstigste Produkt anzeigen lassen. Durch Betätigung der Taste "best price" erscheint im Anzeigefeld für den Preis pro Einheit bei dem günstigsten Produkt der Hinweis "best price".

Mit dem erfindungsgemäßen Taschenrechner kann der Benutzer auch seinen Verbrauch eines Produkts pro Woche, Monat oder Jahr ausrechnen. Hierfür sind mehrere separat angeordnete Zeitraumwahltasten vorgesehen, wobei die Zeitraumwahltasten die Zeiträume Woche, Monat und Jahr aufweisen. Durch Drücken der Mengeneinheitswahltaste "Stck" und anschließendes Eingeben des Stückzahlwertes sowie Drücken der entsprechenden Zeitraumwahltaste wird der Verbrauch pro Woche, Monat oder Jahr ermittelt und in einem gesonderten Anzeigefeld angezeigt. Dabei sind vorteilhafterweise die Anzeigefelder für den Verbrauch pro Zeitraum den entsprechenden Zeitraumwahltasten naheliegend zugeordnet.

Bei der Erfindung ist ein mittig angeordnetes Hauptanzeigefeld vorgesehen, welches die Ersparnis zwischen dem günstigsten und dem teuersten Produkt pro Stück, in Prozent und pro Jahr anzeigt. Hierdurch bekommt der Benutzer eine Vorstellung davon, dass scheinbar kleine Ersparnisbeträge sich über das Jahr zu erheblichen Beträgen aufsummieren. Für die Ermittlung der Ersparnis pro Jahr kann der Benutzer mit dem erfindungsgemäßen Taschenrechner den Verbrauch des günstigsten Produkts pro Woche, Monat oder Jahr eingeben. Hierfür sind mehrere separat angeordnete Zeitraumwahltasten vorgesehen, wobei die Zeitraumwahltasten die Zeiträume Woche, Monat und Jahr aufweisen. Die Eingabe der Verbrauchsmenge erfolgt durch Betätigen der Taste "Woche", "Monat" oder "Jahr" und anschließende Eingabe der Verbrauchsmenge über die Einheits- und Zifferntasten. Die Mengeneingabe wird über die Taste "Enter" abgeschlossen. Somit kann der Rechner den Jahresverbrauch ermitteln und dem Benutzer die Ersparnis pro Jahr in einem gesonderten Anzeigefeld anzeigen.

Damit beim Einkauf der Benutzer nicht immer gesondert einen Einkaufswagenchip oder eine entsprechende Münze mitführen muss, sieht eine Ausführungsform der Erfindung vor, dass eine Halterung für einen Einkaufswagenchip oder eine Münze vorgesehen ist. Die Halterung ist vorteilhafterweise als Schlitz in dem Gehäuse des Taschenrechners ausgebildet. Weiterhin weist der Taschenrechner vorteilhafterweise eine Haltevorrichtung zum Befestigen an einem Einkaufswagen auf.

Damit der Benutzer den Taschenrechner Platz sparend mit sich führen kann, sieht eine weitere Ausführungsform der Erfindung vor, dass der Taschenrechner zusammenklappbar ist.

Erfindungsgemäß wird der Taschenrechner auch als Einsparungsrechner zum Berechnen und Anzeigen einer Ersparnis zwischen dem günstigsten Produkt und dem teuersten Produkt pro Stück, in Prozent und pro Jahr verwendet.

Die Erfindung wird nachstehend anhand der Zeichnung näher erläutert. Die Zeichnung zeigt Ausführungsbeispiele der Erfindung. Hierbei stellen dar:

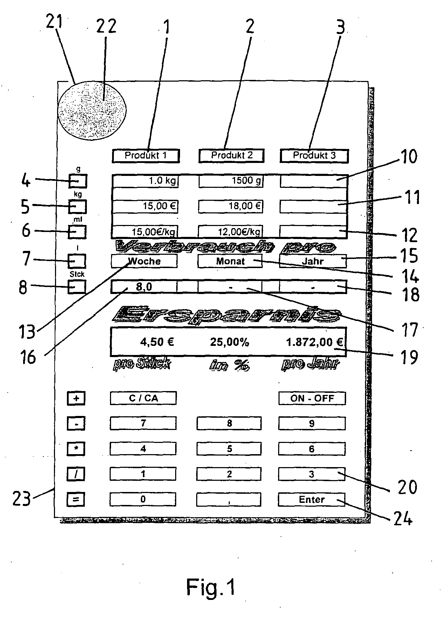

- Fig. 1: eine Draufsicht auf ein erstes Ausführungsbeispiel und
- Fig. 2: eine Draufsicht auf ein zweites Ausführungsbeispiel.

Der erfindungsgemäße Taschenrechner weist an seiner Oberseite eine erste Produktwahltaste 1, eine zweite Produktwahltaste 2 und eine dritte Produktwahltaste 3 auf, welche nebeneinander angeordnet sind. Senkrecht dazu sind mehrere Mengeneinheitswahltasten vorgesehen, wobei sich die erste Mengeneinheitswahltaste 4 auf Gramm, die zweite Mengeneinheitswahltaste 5 auf Kilogramm, die dritte Mengeneinheitswahltaste 6 auf Milliliter, die vierte Mengeneinheitswahltaste 7 auf Liter und die fünfte Mengeneinheitswahltaste 8 auf die Stückzahl bezieht. Unterhalb der Produktwahltasten 1, 2 und 3 und neben den Mengeneinheitswahltasten sind ein erstes Anzeigefeld 10 für die Menge des ersten Produkts, ein zweites Anzeigefeld 11 für den Preis des ersten Produkts und ein drittes Anzeigefeld 12 für den Preis pro Mengeneinheit des ersten Produkts angeordnet. Entsprechende Anzeigefelder 10, 11, 12 sind in gleicher Weise unterhalb der zweiten Produktwahltaste 2 für das zweite Produkt und der dritten Produktwahltaste 3 für das dritte Produkt vorgesehen. Unterhalb dieser Anzeigefelder 10, 11, 12 sind eine erste Zeitraumwahltaste 13 für den Zeitraum Woche, eine zweite Zeitraumwahltaste 14 für den Zeitraum Monat und eine dritte Zeitraumwahltaste 15 für den Zeitraum Jahr vorgesehen. Unterhalb dieser Zeitraumwahltasten 13, 14, 15 sind naheliegend Verbrauchsanzeigefelder 16, 17, 18 angeordnet, in welche mit Hilfe der Zifferntasten oder Eingabetasten 20 der Verbrauch pro Woche, pro Monat und pro Jahr eingegeben werden kann. Das jeweilige Verbrauchsanzeigefeld 16, 17, 18 wird durch Betätigen der entsprechenden Zeitraumwahltaste 13, 14, 15 für Woche, Monat oder Jahr automatisch aktiviert. Etwa im Bereich der Mitte des Taschenrechners ist ein Hauptanzeigefeld 19 vorgesehen, welches die Ersparnis pro Stück, in Prozent und pro Jahr anzeigt. Darunter sind die bei Taschenrechner üblichen Eingabetasten 20 angeordnet. Sie dienen der Eingabe der Zahlenwerte für die Preise und Mengen. Der Taschenrechner kann auch als herkömmlicher Taschenrechner zum Addieren und Multiplizieren verwendet werden, so dass die entsprechenden Tasten zusammen mit einer Enter-Taste 24 und der C/CA-Taste ebenfalls auf der Oberseite des Rechners im Bereich der Eingabetasten 20 vorgesehen sind.

Schematisch dargestellt ist eine Halterung 21 für einen Einkaufswagenchip 22 oder eine Münze. Die Halterung 21 ist als Schlitz in dem Gehäuse 23 des Taschenrechners ausgebildet, in welchen der Chip 22 soweit eingeschoben wird, dass er einerseits nicht mehr herausfallen kann und andererseits in einfacher Weise wieder aus dem Gehäuse 23 bei Bedarf herausgenommen werden kann.

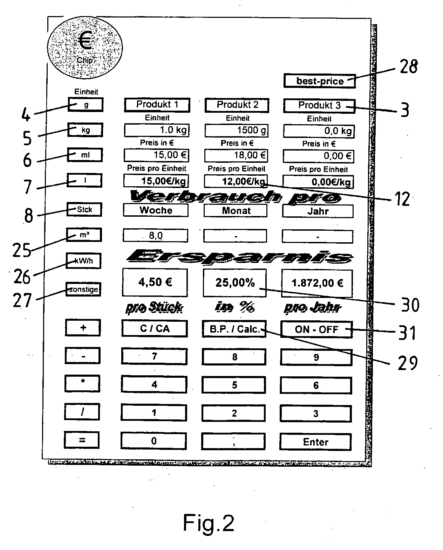

Bei einem zweiten Ausführungsbeispiel gemäß Fig.2 sind zusätzlich zu den Mengeneinheitswahltasten 4, 5, 6, 7, 8 noch eine sechste Mengeneinheitswahltaste 25 für Kubikmeter, eine siebte Mengeneinheitswahltaste 26 für Kilowattstunden und eine achte Mengeneinheitswahltaste 27 für sonstige Einheiten vorgesehen. Weiterhin ist eine Taste "best price" 28 oberhalb der Produktwahltaste 3 angeordnet. Die Umstellung von Best-Price-Rechner auf normalen Taschenrechnerbetrieb erfolgt über eine Umschalttaste "B.P./Calc. 29. Bei Taschenrechnerbetrieb erfolgt die Anzeige nur über ein Anzeigefeld 30. Daneben verfügt der Rechner über eine ON-OFF Taste 31.

Bei Betrieb des erfindungsgemäßen Taschenrechners wird die Produktwahltaste 1 gedrückt und anschließend der Zahlenwert des Preises über die Eingabetasten 20 eingegeben und durch die Enter-Taste 24 bestätigt. Dann wird beispielsweise die Mengeneinheitswahltaste 5 für Kilogramm gedrückt und der entsprechende Zahlenwert wieder über die Eingabetasten 20 eingegeben und mit der Enter-Taste 24 bestätigt. In dem Anzeigefeld 12 erscheint der Preis pro Mengeneinheit. In gleicher Weise werden für das Produkt 2 und für das Produkt 3 der Preis und die Menge eingegeben. Der Benutzer sieht nun in den Anzeigefeldern 12 für das Produkt 1, das Produkt 2 und das Produkt 3 den Preis pro Mengeneinheit und erkennt, welches das preisgünstigste Produkt ist. Ergänzend kann der Benutzer durch Betätigung der Taste "best price" 28 sich das günstigste Produkt anzeigen lassen. Durch Betätigung der Taste "best price" 28 erscheint im Anzeigefeld 12 (Preis pro Einheit) bei dem günstigsten Produkt der Hinweis "best price".

Zum Berechnen der Ersparnis pro Jahr wird zuerst die entsprechende Zeitraumwahltaste 13, 14, 15 für den Verbrauch pro Woche, pro Monat oder pro Jahr gedrückt. Danach wird die Mengeneinheitswahltaste für die entsprechende Verbrauchsangabe betätigt und danach der entsprechende Verbrauchswert über die Zifferntasten oder Eingabetasten 20 eingegeben und über die Enter-Taste 24 bestätigt. In dem Hauptanzeigefeld 19 erscheint nun neben der Ersparnis pro Mengeneinheit/Stück und in Prozent zusätzlich die Ersparnis pro Jahr.

Mit dem erfindungsgemäßen Taschenrechner kann der Benutzer in einfacher und übersichtlicher Weise das günstigste Produkt bzw. die günstigste Leistung ermitteln. Daneben erhält er auch eine Information über den Preisunterschied in Prozent sowie darüber, auf welche Höhe sich diese Ersparnis in Abhängigkeit vom Verbrauch pro Jahr beläuft.

## Patentansprüche

1. Taschenrechner mit Eingabetasten (20) an seiner Oberseite für die Preise und die Mengen von mehreren Produkten und mit mindestens einem Anzeigefeld (19) und mit einer Recheneinheit, wobei der über die Eingabetasten (20) eingegebene Preis einem bestimmten Produkt zugeordnet ist und der über die Eingabetasten (20) eingegebene Mengenwert einer bestimmten Mengeneinheit zugeordnet ist, und mindestens eine Mengeneinheitswahltaste (4) vorgesehen ist, wobei die Zuordnung des Mengenwertes zu einer bestimmten Mengeneinheit über die mindestens eine Mengeneinheitswahltaste (4) erfolgt,
**dadurch gekennzeichnet,**
**dass** mehrere separat angeordnete Produktwahltasten (1, 2, 3), mehrere separat angeordnete Mengeneinheitswahltasten (4, 5, 6, 7, 8, 25, 26, 27) und mehrere separat angeordnete Zeitraumwahltasten (13, 14, 15) an der Oberseite vorgesehen sind, wobei die Zuordnung des eingegebenen Preises zu dem bestimmten Produkt über die separaten Produktwahltasten (1, 2, 3), die Zuordnung des Mengenwertes zu einer bestimmten Mengeneinheit über die separaten Mengeneinheitswahltasten (4, 5, 6, 7, 8, 25, 26, 27) und die Zuordnung einer eingegebenen Verbrauchsmenge zu einem bestimmten Zeitraum über die Zeitraumwahltasten (13, 14, 15) erfolgen und für die Anzeige von Preis und Menge jeweils separate Anzeigefelder (11,10) und zusätzlich Verbrauchsanzeigefelder (16,17,18) und ein Hauptanzeigefeld (19) vorgesehen sind, wobei jeder Produktwahltaste (1, 2, 3) ein Anzeigefeld (11) für den Preis und ein Anzeigefeld (10) für die Menge und ein Anzeigefeld (12) für den Preis pro Mengeneinheit naheliegend zugeordnet ist und das mittig angeordnete Hauptanzeigefeld (19) die Ersparnis pro Stück, in Prozent und pro Jahr anzeigt.

2. Taschenrechner nach Anspruch 1,
**dadurch gekennzeichnet,**
**dass** die Mengeneinheitswahltasten (4, 5, 6, 7, 8, 25, 26, 27) die Einheiten Gramm, Kilogramm, Milliliter, Liter, Stückzahl, Kubikmeter, Kilowattstunden und sonstiges aufweisen.

3. Taschenrechner nach einem der vorhergehenden Ansprüche,
**dadurch gekennzeichnet,**
**dass** die separat angeordneten Zeitraumwahltasten (13, 14, 15) für die Zeiträume Woche, Monat und Jahr vorgesehen sind.

4. Taschenrechner nach einem der vorhergehenden Ansprüche,
**dadurch gekennzeichnet,**
**dass** eine Taste "best price" (28) angeordnet ist, die das günstigste Produkt im Anzeigefeld 12 mit "best price" kennzeichnet.

5. Taschenrechner nach einem der vorhergehenden Ansprüche,
**dadurch gekennzeichnet,**
**dass** eine Halterung (21) für einen Einkaufswagenchip (22) oder eine Münze vorgesehen ist, wobei die Halterung (21) als Schlitz im Gehäuse (23) ausgebildet ist.

6. Taschenrechner nach einem der vorhergehenden Ansprüche,
**dadurch gekennzeichnet,**
**dass** eine Haltervorrichtung zum Befestigen an einem Einkaufswagen vorgesehen ist.

7. Taschenrechner nach einem der vorhergehenden Ansprüche,
**gekennzeichnet durch** einen Klappmechanismus zum Zusammenklappen des Taschenrechners.

8. Verwendung eines Taschenrechners nach Anspruch 1 als Einsparungsrechner zum Errechnen und Anzeigen der Ersparnis zwischen dem günstigsten und teuersten Produkt pro Stück, in Prozent und pro Jahr.

## Claims

1. Pocket calculator with input keys (20) on its upper side for prices and quantities of several products and with at least one display field (19) and with a calculation unit, wherein the price entered by way of the input keys (20) is allocated to a particular product and the quantity value entered by way of the input keys (20) is allocated to a particular quantity unit, and at least one quantity unit selection key (4) is provided, wherein the quantity value is allocated to a particular quantity unit by way of the at least one quantity unit selection key (4),
**characterised in that**
several separately arranged product selection keys (1, 2, 3), several separately arranged quantity unit selection keys (4, 5, 6, 7, 8, 25, 26, 27) and several separately arranged period selection keys (13, 14, 15) are provided on the upper side, wherein the entered price is allocated to the particular product by way of the separate product selection keys (1, 2, 3), the quantity value is allocated to a particular quantity unit by way of the separate quantity unit selection keys (4, 5, 6, 7, 8, 25, 26, 27) and an entered consumption quantity is allocated to a particular period by way of the period selection keys (13, 14, 15), and for the display of price and quantity separate display fields (11, 10) and additional consumption display fields (16, 17, 18) and a main display field (19) are provided, wherein each product selection key (1, 2, 3) is allocated a display field (11) for the price and a display field (10) for the quantity and a display field (12) for the price per quantity unit positioned close together, and the centrally arranged main display field (19) shows the saving per item, in percent and per year.

2. Pocket calculator according to claim 1, **characterised in that** the quantity unit selection keys (4, 5, 6, 7, 8, 25, 28, 27) show the units gramme, kilogramme, millilitre, litre, number, cubic metre, kilowatt-hour and others.

3. Pocket calculator according to any of the preceding claims, **characterised in that** the separately arranged period selection keys (13, 14, 15) are provided for the periods week, month and year.

4. Pocket calculator according to any of the preceding claims, **characterised in that** a "best price" key (28) is provided which identifies the cheapest product in display field 12 with "best price".

5. Pocket calculator according to any of the preceding claims, **characterised in that** a holder (21) is provided for a shopping trolley token (22) or a coin,
wherein the holder (21) is formed as a slot in the housing (23).

6. Pocket calculator according to any of the preceding claims, **characterised in that** a holder device is provided for attachment to a shopping trolley.

7. Pocket calculator according to any of the preceding claims, **characterised by** a folding mechanism for folding away the pocket calculator.

8. Use of a pocket calculator according to claim 1 as a savings calculator for calculating and displaying the saving between the cheapest and the most expensive product per item, in percent and per year.

## Revendications

1. Calculatrice de poche avec des touches de saisie (20) sur son côté supérieur pour les prix et les quantités de plusieurs produits et au moins un champ d'affichage (19) et une unité de calcul, sachant qu'un produit déterminé est associé au prix saisi par les touches de saisie (20) et la valeur de quantité saisie par les touches de saisie (20) est associée à une unité de quantité déterminée, et au moins une touche de sélection d'unité de quantité (4) est prévue, sachant que la valeur de quantité est associée à une unité de quantité déterminée par au moins une touche de sélection d'unité de quantité (4),
**caractérisée en ce que** plusieurs touches de sélection de produit (1, 2, 3) disposées séparément, plusieurs touches de sélection d'unité de quantité (4, 5, 6, 7, 8, 25, 26, 27) disposées séparément et plusieurs touches de sélection de période (13, 14, 15) disposées séparément sont prévues sur le côté supérieur, sachant que l'association du prix saisi au produit déterminé est effectuée par les touches de sélection de produit (1, 2, 3) séparées, l'association de la valeur de quantité à une unité de quantité déterminée est effectuée par les touches de sélection d'unité de quantité (4, 5, 6, 7, 8, 25, 26, 27) séparées et l'association d'une quantité consommée saisie à une période déterminée est effectuée par les touches de sélection de période (13, 14, 15) et pour l'affichage du prix et de la quantité, des champs d'affichage (11, 10) respectivement séparés et en outre des champs d'affichage de consommation (16, 17, 18) et un champ d'affichage principal (19) sont prévus, sachant qu'à chaque touche de sélection de produit (1, 2, 3) sont associés de manière concevable un champ d'affichage (11) pour le prix et un champ d'affichage (10) pour la quantité et un champ d'affichage (12) pour le prix par unité de quantité et le champ d'affichage principal (19) disposé au milieu affiche l'économie par pièce, en pourcent et par année.

2. Calculatrice de poche selon la revendication 1, **caractérisée en ce que** les touches de sélection d'unité de quantité (4, 5, 6, 7, 8, 25, 26, 27) présentent les unités gramme, kilogramme, millimètre, litre, nombre de pièces, mètre cubique, kilowattheure et autres.

3. Calculatrice de poche selon l'une quelconque des revendications précédentes, **caractérisée en ce que** les touches de sélection de période (13, 14, 15) disposées séparément sont prévues pour les périodes semaine, mois et année.

4. Calculatrice de poche selon l'une quelconque des revendications précédentes, **caractérisée en ce qu'**une touche « meilleur prix » (28) est disposée, laquelle caractérise le produit le plus avantageux dans le champ d'affichage (12) par « meilleur prix ».

5. Calculatrice de poche selon l'une quelconque des revendications précédentes, **caractérisée en ce qu'**une fixation (21) pour une puce de chariot (22) ou une pièce est prévue, sachant que la fixation (21) est réalisée comme une fente dans le boîtier (23).

6. Calculatrice de poche selon l'une quelconque des revendications précédentes, **caractérisée en ce qu'**un dispositif de retenue est prévu pour la fixation sur un chariot.

7. Calculatrice de poche selon l'une quelconque des revendications précédentes, **caractérisée par** un mécanisme rabattable pour le pliage de l'ordinateur de poche.

8. Utilisation d'une calculatrice de poche selon la revendication 1 comme calculatrice d'économie destinée à calculer et afficher l'économie entre le produit le plus avantageux et le produit le plus cher par pièce, en pourcent et par année.
